Europäisches Patentamt

(19) European Patent Office

Office européen des brevets

(11) Publication number: **0 045 379**

**A1**

(12) **EUROPEAN PATENT APPLICATION**

(21) Application number: **81105148.1**

(22) Date of filing: **02.07.81**

(51) Int. Cl.³: **B 29 C 17/03**
**B 68 G 7/00**

(30) Priority: **31.07.80 JP 105682/80**

(43) Date of publication of application:
**10.02.82 Bulletin 82/6**

(84) Designated Contracting States:
**DE FR GB IT**

(71) Applicant: **NISSAN MOTOR COMPANY, LIMITED**
**No.2, Takara-cho, Kanagawa-ku**
**Yokohama City(JP)**

(72) Inventor: **Tsujimura, Harutoshi**
**No.2639-55,Kamariya-cho**
**Kanazawa-ku Yokohama City(JP)**

(72) Inventor: **Fukunaga, Yukio**
**No. 3-8 B-504 Ikego**
**Zushi City(JP)**

(72) Inventor: **Okada, Yasuhiro**
**No. 2-12-36 Sugita, Isogo-ku**
**Yokohama-City(JP)**

(72) Inventor: **Furuya, Nobuo**
**No.1486-5,Omote-jionji**
**Iwatsuki City(JP)**

(72) Inventor: **Nakabayashi, Isao**
**No.56-12,Nara-cho**
**Omiya City(JP)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) Method of forming air-permeable covering for use in upholstering.

㊗ A method of forming a covering which is made of a soft and air-permeable material such as textile fabric or leather and is for use in upholstering of, for example, a seat in a vehicle. A thermoplastic resin sheet (42) impermeable to air is peelably placed on one side of a sheet (40) of the aforementioned material, and the resultant temporary laminate (44) is heated and formed into a desired shape by a vacuum forming process. Subsequently the resin sheet (42) is peeled away from the shaped laminate (44), so that the soft and air-permeable material (40) alone constitutes the shaped covering.

FIG. 6

METHOD OF FORMING AIR-PERMEABLE

COVERING FOR USE IN UPHOLSTERING

BACKGROUND OF THE INVENTION

This invention relates to a method of forming a covering which is made of an air-permeable sheet material and is for use in upholstering of, for example, a seat or an inner trim panel in a vehicle.

In current automobiles under mass production, there is a strong trend of employing either textile fabric or leather as the covering or upholstering material for seats and trim panels with the view to giving a luxurious impression and utmost comfortableness to the users.

In the case of the seats for instance, both textile fabric and leather are preferred as the covering material because of not only luxuriousness in appearance but also superiority in permeability to air and the feeling of fitness to the seat occupants. From an industrial viewpoint, however, it becomes a serious matter of concern that seat coverings of these materials are far lower in productivity than the counterparts formed of thermoplastic resins. The familiar method of forming a cloth or leather covering for an automobile seat is to sew several pieces of cloth or leather together into a three-dimensional shape fitting to the seat cushion and/or the backrest padding.  As will be understood, this method is quite troublesome and requires many manhours.

For some automobiles, it has been put into practice to utilize a vacuum forming method to form seat coverings of cloth by intimately coating the back side of the cloth with a thermoplastic resin in advance of the vacuum forming process to thereby prevent permeation of air through the cloth.  This method is effective for greatly reducing the production cost, but the coverings manufactured by this method retain the resin coating layer on the back side and therefore lack air-permeability and feel rough or stiff, losing softness characteristic of textile fabric.  Strictly speaking, the products of this method are scarcely attractive to the users.

SUMMARY OF THE INVENTION

It is an object of the present invention to provide a novel method of forming a covering which is made of a soft and air-permeable sheet material such as cloth or leather and is for use in upholstering of a desired article typified by a seat or a trim panel in a vehicle, which method can be performed at a low labor cost and allows the product to retain the permeability and the soft feel characteristic of the material.

In a method according to the invention, a covering is formed through the steps of preparing a temporary
laminate of a basic sheet of a soft and air-permeable
material and a thermoplastic resin sheet which is practically
impermeable to air and is peelably brought into contact
with one side of the basic sheet, heating the temporary
laminate so as to soften the resin sheet, forming the
heated temporary laminate into an intended shape by
a vacuum forming process wherein the basic sheet of
the temporary laminate is brought into direct contact
with a mold which is shaped correspondingly to the
intended shape of the covering and formed with openings
for the purpose of suction, cooling the shaped temporary
laminate until re-solidification of the resin sheet,
and peeling the resin sheet away from the shaped temporary
laminate.

This method is characterized by the use of a thermoplastic resin sheet which is brought into close contact
with the basic sheet but can be peeled away whenever
desired.  Therefore, no adhesive is used in preparing
the temporary laminate, and it is outside the scope
of the invention to apply a liquid state thermoplastic
resin onto the basic sheet.  Preferably, the thermoplastic
resin sheet is placed on a front side of the basic
sheet.  Owing to the presence of the resin sheet which
is impermeable to air, the temporary laminate as a

-3-

whole can be formed into a desired shape by a usual vacuum forming process. Accordingly this method can be performed with high productivity and at a very low labor cost.

The thermoplastic resin sheet is peeled away from the shaped temporary laminate at any desired stage after completion of the vacuum forming process, so that the shaped basic sheet alone constitutes a covering as the product of a method of the invention. Naturally, this covering is permeable to air and retains the soft feel and desirable appearance of the material of the basic sheet such as textile fabric of either natural fiber or synthetic fiber, nonwoven cloth or leather. As a subsidiary effect of the resin sheet, the front side of the shaped covering is protected from contamination or damaging during handling and storage before its use in an upholstering process.

BRIEF DESCRIPTION OF THE DRAWINGS

Fig. 1 is a perspective view of a seat for a vehicle as an example of articles using coverings formed by a method according to the invention;

Fig. 2 is a sectional view taken along the line 2-2 in Fig. 1;

Fig. 3 is a sectional view of a seat which is similar in construction to the seat of Figs. 1 and 2 but uses a covering formed by a conventional method;

Fig. 4 is a sectional view of a seat which too is similar in construction but uses a covering formed by another known method;

Figs. 5-8 explanatorily illustrate a vacuum forming process to form the seat covering shown in Fig. 2 by a method according to the invention;

Fig. 9 is a sectional view of an automobile door inner trim panel as another example of articles using coverings formed by a method of the invention;

Fig. 10 is a sectional view of the covering and the basic part of the trim panel of Fig. 9; and

Fig. 11 is a partial enlargement of the covering in Fig. 10.

DESCRIPTION OF THE PREFERRED EMBODIMENTS

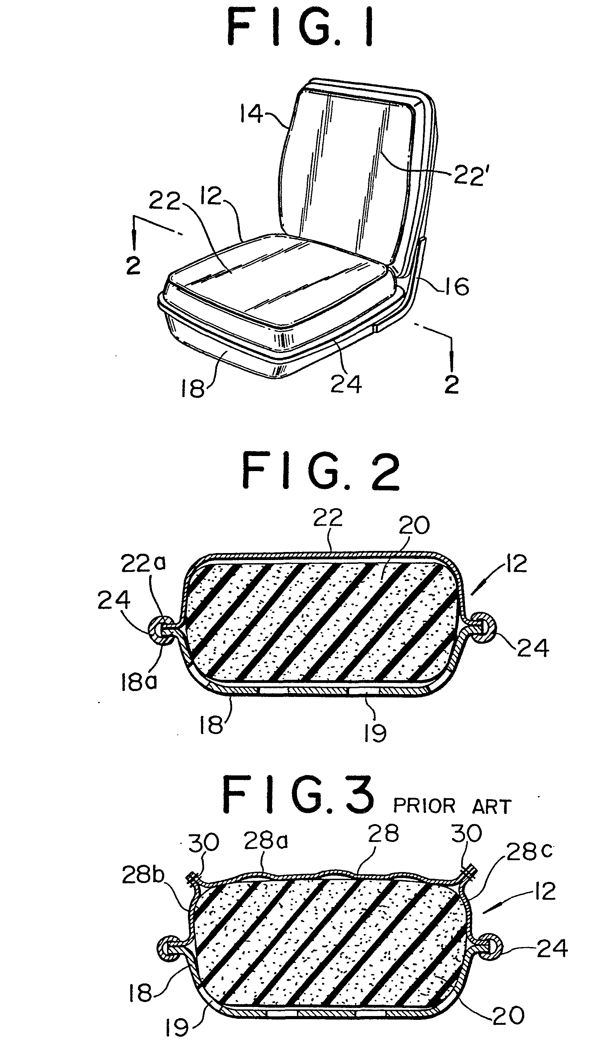

Fig. 1 shows a seat for installation in an automobile. This seat consists fundamentally of a seating portion 12 and a backrest 14 joined together by angled brackets 16. As can be seen in Fig. 2, the structurally basic part of the seating portion 12 is a tray-like frame 18 produced by press-forming of a sheet metal or molding of a synthetic resin. The frame 18 is formed with several apertures 19 for the purpose of ventilation. Placed on the frame 18 is a suitably shaped cushion 20 which may be a block of a plastic foam such as urethane foam or styrene foam or a mattress containing cotton or feathers by way of example. The thickness of the cushion 20 is greater than the depth of the tray-like frame 18, so that a considerable portion of the cushion 20 protrudes over the frame 18. This portion of the cushion 20 is completely covered by a covering 22 which is a single piece of sheet of a relatively soft and gas-permeable material as typified by a textile fabric formed by a method according to the invention correspondingly to the shape of the protruding portion of the cushion 20 in advance of assembling of the seating portion 12. The frame 18 is formed with a marginal flange 18a, and the covering 22 is formed with a marginal region 22a corresponding in shape and size to the flange 18a. Accordingly the covering 22 placed on the cushion 20 can be fixed in the marginal region 22a to the flange 18a of the frame 18 by means of a clamp 24 along the periphery of the seating portion 12. Usually the covering 22 is not stuck to the cushion 20 so as to cover the cushion 20 with some looseness, but if desired the covering 22 may be stuck to the cushion 20 in limited areas by using an adhesive.

The material of the covering 22 can be selected from a wide variety of sheet materials which are porous or permeable to gases. For example, use may be made of a textile fabric cloth of either a natural fiber such as wool or cotton or a synthetic fiber typified by nylon or acrylic fiber, nonwoven cloth of synthetic fiber, knitted cloth of natural or synthetic fiber, or leather.  The primary consideration in selecting the material and determining the thickness of the covering 22 would be the feel, touch, appearance and comfortableness of the covering 22 when assembled in the seat.

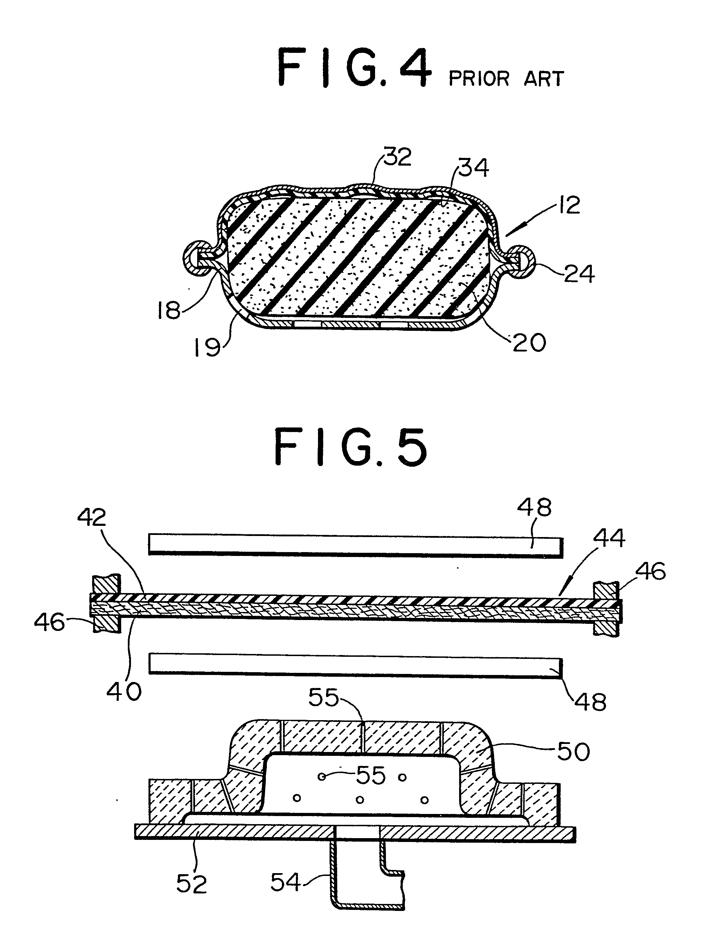

As mentioned hereinbefore and illustrated in Fig. 2, the seat covering 22 formed by a method of the invention is seamless and has no lining on the back side.  For comparison, Fig. 3 shows a cloth covering 28 formed by a conventional method and applied to the seating portion 12 of the seat of Fig. 1.  This covering 28 is formed by sewing several pieces of cloth 28a, 28b, 28c together.  Indicated at 30 are resultant seams. As discussed hereinbefore, the production of this covering 28 requires many manhours of labor.  Fig. 4 shows another covering 32 which is formed by a known vacuum forming technique and applied to the seating portion 12 of the seat of Fig. 1.  In appearance this covering 32 is formed of a single layer of cloth, but actually the back side of this cloth 32 is entirely laid with a synthetic resin coating 34 to prevent permeation of air through the cloth 32 during the vacuum forming process. Therefore, this covering (32 + 34) lacks permeability and is undesirably stiff to the touch.

The backrest 14 too may be constructed resemblingly to the above described seating portion 12 by using a covering 22' formed by a method according to the invention.

Now, a practical method of forming the seat covering 22 shown in Fig. 2 will be described with reference to Figs. 5 to 8.

Referring to Fig. 5, the first step is to place a thermoplastic resin sheet 42 on a front side of a sufficiently broad piece of cloth 40 employed as the material of the covering 22 to thereby obtain a temporary laminate 44. It is desirable that the resin sheet 42 be in close contact with the cloth 40, but in the present invention it is a requisite that the resin sheet 42 can be peeled away from the cloth 40 whenever desired. Therefore, no adhesive is applied between the cloth 40 and the resin sheet 42. It is permissible to somewhat soften the resin sheet 42 by heating and apply an adequate pressure in order to establish a close contact between the cloth 40 and the resin sheet 42 over the entire area and cause temporary sticking of the resin sheet 42 to the cloth 40. There are no strict restrictions on the material and thickness of the thermoplastic resin sheet 42 so long as the resin sheet 42 is practically impermeable to air and becomes adequately soft, extendable and suitable for relatively deep drawing when heated.  Some examples of available thermoplastic resins are polystyrene, polyethylene, polypropylene, ABS resin and a certain type of fluorine-containing resin.

In a spread state, the temporary laminate 44 is firmly held in its merginal region by a set of clamping frames 46 fixed to stays (not shown) of a vacuum forming machine such that the cloth 40 faces a mold 50, male-mold in this case, shaped similarly to the upper portion of the cushion 20 in Fig. 2.  The mold 50 is mounted on a vertically movable bed 52 and is formed with a suitable number of holes 55 which communicate with a suction duct 54 extending from a vacuum source (not shown) to the bed 52.  In this state, the temporary laminate 44 is heated by means of movable heaters 48.

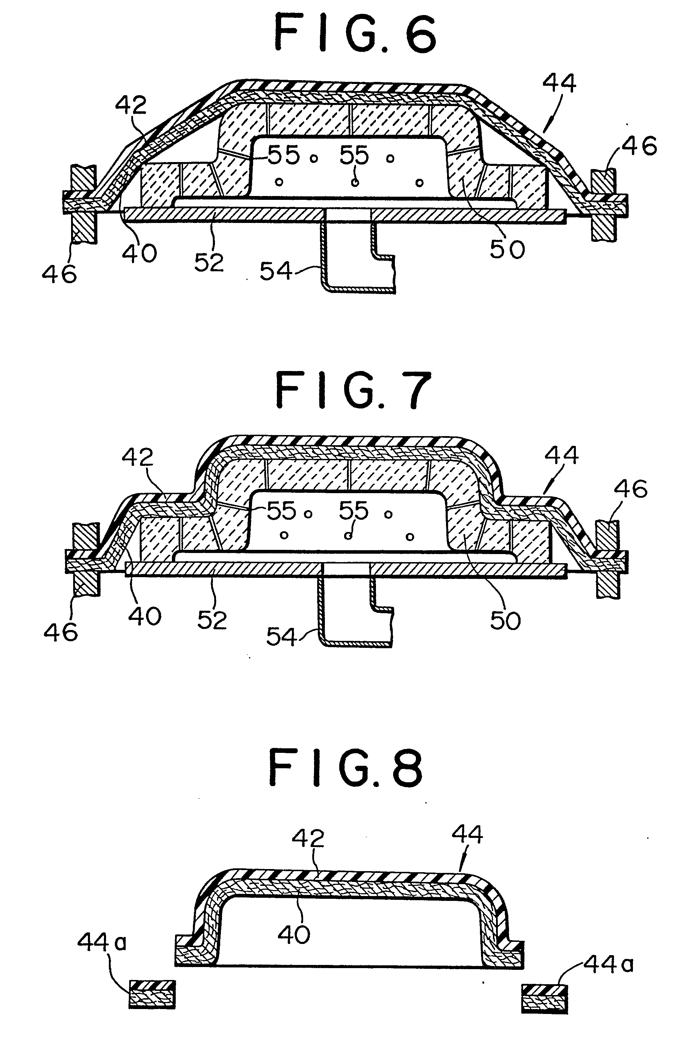

After softening of the resin sheet 42 of the temporary laminate 44 the heaters 48 are withdrawn, and soon the bed 52 is moved upwardly to bring the mold 50 into contact with the heated laminate 44, as shown in Fig. 6, until the mold 50 forces the laminate 44 to deflect upwardly to such an extent that the outer periphery of the mold 50 comes into close contact with the laminate 44. As a consequence, a closed space is defined between the laminate 44 and the shaped surface of the mold 50 in the uncontacted region. In this state the mold 50 is held stationary and vacuum is applied through the duct 54 to the interior of the mold 50 to extract air confined between the mold 50 and the laminate 44 through the holes 55 in the mold 50. As the effect of suction, the temporary laminate 44 is drawn onto the shaped surface of the mold 50 as shown in Fig. 7. At this stage the resin sheet 42 on the outer side is still in the heated and softened state and, therefore, readily deforms in exact conformity with the shaped surface of the mold 50 and forces the cloth 42 to be formed into the same shape.

After cooling and solidification of the resin sheet 42 of the shaped temporary laminate 44, air is introduced into the interior of the mold 50, followed by descent of the mold 50 and detachment of the shaped temporary laminate 44 from the clamping frames 46. As illustrated in Fig. 8, the shaped temporary laminate 44 is subjected to trimming to cut off an unnecessary marginal portion 44a. The seat covering 22 in Fig. 2 is obtained by peeling the rein sheet 42 from the shaped cloth 40 in the state of Fig. 8.

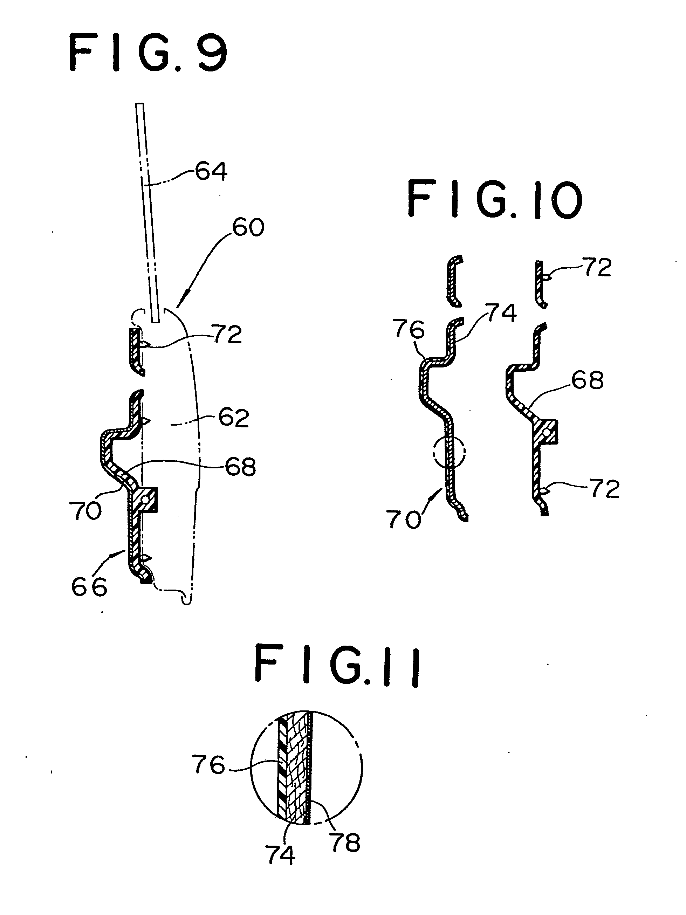

Fig. 9 shows an automobile door 60 provided with an inner trim panel 66 to which the present invention is applicable. The trim panel 66 consists fundamentally of a base or backing part 68 formed by molding of a synthetic resin or press-forming of a sheet metal or fiberboard and a cloth covering 70 stuck to the inboard side surface of the backing part 68 with an adhesive (not illustrated).

This trim panel 66 is attached to a door panel 62 by using clips 72 fixed to the outboard side of the backing part 68. Indicated at 64 is a window glass plate.

Referring to Fig. 10, the trim panel covering 70 is produced by vacuum molding of a temporary laminate of a piece of cloth 74 and a thermoplastic resin sheet 76 which is brought into close contact with the front side of the cloth 74 but can be peeled away from the cloth 74 whenever desired. The vacuum forming process is performed while the resin sheet 76 is in a heated and softened state as will be understood from the foregoing description about the vacuum forming of the seat covering. As shown in Fig. 11, a double-faced adhesive tape 78 may be attached to the back side of the cloth 74, i.e. outboard side of the covering 70, as a convenient means for adhesion of the shaped covering 70 to the backing part 68 of the trim panel 66. Needless to mention,

-12-

it is possible to use leather as the material of the covering 70 instead of the above described cloth.

WHAT IS CLAIMED IS:

1. A method of forming a covering which is made of an air-permeable sheet material and serves as an upholstering member, the method comprising the steps of:

preparing a temporary laminate (44) of a basic sheet (40) of a soft and air-permeable material and a thermoplastic resin sheet (42) which is practically impermeable to air and peelably brought into contact with one side of said basic sheet;

heating said temporary laminate so as to soften said resin sheet;

forming the heated temporary laminate into an intended shape by a vacuum forming process wherein said basic sheet of the temporary laminate is brought into direct contact with a mold (50) which is shaped correspondingly to the intended shape of the covering and formed with openings for the purpose of suction;

cooling the shaped temporary laminate until re-solidification of the resin sheet; and

peeling the resin sheet away from the shaped temporary laminate.

2. A method according to Claim 1, wherein said one side of said basic sheet becomes a front side of the shaped covering.

-14-

3.    A method according to Claim 1, wherein said soft and air-permeable material is a textile fabric.

4.    A method according to Claim 3, wherein said textile fabric is essentially of a natural fiber.

5.    A method according to Claim 3, wherein said textile fabric is essentially of a synthetic fiber.

6.    A method according to Claim 1, wherein said basic sheet is a nonwoven cloth of a synthetic fiber.

7.    A method according to Claim 1, wherein said basic sheet is a knitted cloth.

8.    A method according to Claim 1, wherein said soft and air-permeable material is a leather.

0045379

# FIG. I

# FIG. 2

# FIG.3 PRIOR ART

0045379

# FIG.4 PRIOR ART

# FIG.5

0045379

# FIG.6

42
44
55  55
46
46
40  52  54  50

# FIG.7

42
44
55  55
46
46
40  52  54  50

# FIG.8

42  44
40
44a  44a

# FIG.9

# FIG.10

# FIG.11

0045379

**European Patent Office**

**EUROPEAN SEARCH REPORT**

Application number

EP 81 10 5148

## DOCUMENTS CONSIDERED TO BE RELEVANT

| Category | Citation of document with indication, where appropriate, of relevant passages | Relevant to claim |
|---|---|---|
| X | FR - A - 2 165 776 (TRECA)<br>* Page 3, lines 29-33; figures 6-8 * | 1-3,5 |
| | -- | |
| X | US - A - 3 962 392 (STAHL-URBAN)<br>* Column 4, line 12 to the end; figures 11,12 * | 1-5,7 |
| | -- | |
| | US - A - 3 847 729 (HARTMANN)<br>* Whole document * | 6 |
| | ---- | |

**CLASSIFICATION OF THE APPLICATION (Int Cl.³)**

B 29 C 17/03
B 68 G 7/00

**TECHNICAL FIELDS SEARCHED (Int. Cl.³)**

B 29 C
B 68 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-10-1981 | MARTIN |

EPO Form 1503 1 06.78